(19) Europäisches Patentamt
European Patent Office
Office européen des brevets

(11) **EP 4 700 331 A1**

(12) **EUROPEAN PATENT APPLICATION**

(43) Date of publication:
**25.02.2026 Bulletin 2026/09**

(21) Application number: **25177225.7**

(22) Date of filing: **19.05.2025**

(51) International Patent Classification (IPC):
**G01C 19/00** (2013.01)     **G01C 21/00** (2006.01)
**G01C 21/28** (2006.01)     **B60W 40/06** (2012.01)
**G01C 7/04** (2006.01)

(52) Cooperative Patent Classification (CPC):
**G01C 21/3822; B60W 40/06; G01C 7/04;
G01C 19/005; G01C 21/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.06.2024 EP 24465525
04.06.2024 DE 102024205133**

(71) Applicant: **AUMOVIO Germany GmbH
60488 Frankfurt am Main (DE)**

(72) Inventor: **Tolcea, Cristian Gheorghe
300704 Timisoara (RO)**

(74) Representative: **Aumovio Corporation
AUMOVIO Germany GmbH
Taunusstraße 36
80807 München (DE)**

(54) **SURFACE DETECTION DEVICE, A VEHICLE COMPRISING A SURFACE DETECTION DEVICE, A METHOD TO OPERATE A SURFACE DETECTION DEVICE, A COMPUTER PROGRAM PRODUCT AND COMPUTER-READABLE MEMORY**

(57)     Surface detection device, a vehicle comprising a surface detection device, a method to operate a surface detection device, a computer program product and computer-readable memory

The invention is concerned with a surface detection device (2) configured to detect a predefined surface property of a surface (8) under a vehicle (1). The surface detection device (2) is configured to perform a surface recognition procedure, wherein the surface detection device (2) is configured to receive data points during an operation of the vehicle (1) and to add at least some of the data points to a buffer of the surface detection device (2), wherein the data points relate to a motion of the vehicle (1). The surface detection device (2) is configured to analyze the buffered data points, when the surface detection device (2) recognizes a stop of the vehicle (1). The surface detection device (2) is configured to detect the predefined surface property of the surface (8), when the analysis of the buffered data points reveals that a predefined surface condition is satisfied.

Fig.1

EP 4 700 331 A1

**Description**

Surface detection device, vehicle comprising a surface detection device, method to operate a surface detection device, computer program product and computer-readable memory

The invention is concerned with a surface detection device, a vehicle comprising a surface detection device, a method to operate a surface detection device, a computer program product and computer readable memory.

Accelerometers are used in vehicles for several reasons. One reason is to determine a driver's style of driving the vehicle. Driving style can be assessed from the acceleration values recorded by the accelerometers. Another reason is to determine a slope of a surface under the vehicle.

Vehicle-mounted accelerometers can have multiple axis to determine the accelerations in different directions of the vehicle. As build in accelerometers are mounted in a predefined position in the vehicle, a relationship between the axis of the accelerometer and axes of the vehicle is known and acceleration values measured by the accelerometer may be converted from a coordinate system of the accelerometers to a coordinate system of the vehicle by a translation matrix. The translation matrix may be determined during a manufacturing procedure of the vehicle. However, it may be necessary to determine whether the calibration of the translation matrix is still valid.

Accelerometers may also be provided by aftermarket devices that may be attached to the vehicle after production. The devices may be configured as sticks that may be plug into an On-Board-Diagnose (OBD) interface of the vehicle. However the geometric relation between the coordinate system of the accelerometer of the device and the coordinate system of the vehicle may not be as defined compared to the build in accelerometers. Therefore, the translation matrix between a coordinate system of the accelerometer and the coordinate system of the vehicle may be unknown and needs to be evaluated during a calibration procedure.

Accurate calibration may require the vehicle to be placed on a level surface so that a normal vector to the vehicle is parallel to gravity. A value of a slope of the surface under the vehicle must be below a predefined threshold slope value. Therefore, in order to calibrate the accelerometer, it is necessary to detect whether the vehicle is on a flat surface.

EP 2 732 241 B1 describes a graphical user interface.

CN 100 516 773 C describes a vehicle carried road slope angle measuring system and vehicle carried road slope angle measuring method.

US 2011 035 147 A1 describes a method of determining vehicle route and navigation system.

It is an objective of the present invention to provide a solution to determine whether the vehicle is on a flat surface.

The objective is accomplished by the subject matter of the independent claims. Advantageous developments with convenient and non-trivial further embodiments of the invention are specified in the dependent claims, the following description, and the drawings.

According to a first aspect of the present invention a surface detection device configured to detect a predefined surface property of a surface under a vehicle is provided. The surface detection device may be build into the vehicle or may be attached the vehicle.

The surface detection device may be configured to detect the predefined surface property of the surface. The predefined surface property may indicate that the surface is flat. The surface detection device is configured to perform a surface recognition procedure. The surface detection device is configured to receive data points during an operation of the vehicle and to add at least some of the data points to a buffer of the surface detection device. The data points relate to a motion of the vehicle. The surface detection device is configured to analyze the buffered data points, when the surface detection device recognizes a stop of the vehicle. The surface detection device is configured to detect the predefined surface property of the surface, when the analysis of the buffered data points reveals that a predefined surface condition is satisfied.

The embodiment has the advantage that the surface detection device is configured to determine whether the surface under the vehicle is flat based on data points received during the operation of the vehicle. Therefore, the surface detection device may be used to determine whether calibration of a gyro may be performed.

The invention also comprises embodiments that provide additional technical advantages.

According to a first alternative of the surface detection device, the surface detection device is configured to perform a global navigation satellite system (GNSS) based surface recognition procedure. The surface detection device is configured to receive GNSS data points during the operation of the vehicle and to add the respective GNSS data points to the buffer if the respective GNSS data points fulfil a predefined GNSS data point condition. The GNSS data points may be related to GPS, Galileo and/or GLONASS signals. The GNSS data points may be provided by a GNSS device of the surface detection device or by a GNSS device of the vehicle, based on received GNSS signals. The GNSS data points may be received by the surface detection device during the operation of the vehicle. The surface detection device is configured to prove whether the respective GNSS data points satisfy the predefined GNSS data point condition. If the respective GNSS data point satisfies the predefined GNSS data point condition, the respective GNSS data point is added to the buffer. The GNSS data point condition may ensure a necessary quality of the respective GNSS data point.

The surface detection device is configured to calculate a total vertical difference value of altitude values of the buffered GNSS data points, when the surface detection device recognises the stop of the vehicle. In other words, the surface detection device is configured to determine whether the vehicle has stopped. The determination that the vehicle has stopped may be based on coordinates provided by the GNSS data points or by speed data provided by the vehicle. The surface detection device is configured to calculate the total vertical difference value based on the altitude values of the GNSS data points in the buffer.

The surface detection device is configured to determine whether the total vertical difference value satisfies a predefined total vertical difference value condition. The predefined total vertical difference value condition may be related to a threshold value or to a predefined value range of the total vertical difference value. The surface detection device is configured to detect a predefined GNSS surface property of the surface under the vehicle when the total vertical difference value satisfies the predefined total vertical difference value condition. In other words, the surface detection device is configured to detect the predefined GNSS surface property when the total vertical difference value satisfies the predefined total vertical difference value condition. The predefined GNSS surface property may define that the surface under the vehicle is flat according to GNSS.

According to a second alternative of the surface detection device, the surface detection device is configured to perform a gyro-based surface recognition procedure. The device is configured to receive gyro data points during the operation of the vehicle and to add the gyro data points to the buffer. The gyro data points may be provided to the surface detection device by a gyro of the surface detection device or by a gyro of the vehicle. The gyro data points may comprise acceleration values of three axes of the gyro.

The surface detection device is configured to calculate a normalized average acceleration value based of the acceleration values of the buffered gyro data points when the surface detection device recognises that the vehicle has stopped.

In other words, the device is configured to detect the stop of the vehicle. The device is configured to calculate the normalized average acceleration value of the buffered gyro data points when the vehicle has stopped.

The surface detection device may be configured to calculate the normalized average acceleration value in the following way, wherein a sum of the acceleration value GyroSum may be initialized with "0": For the acceleration value GyroRawValue of each gyro data point in the buffer:

$$GyroSumX = GyroNorAvgX + abs(GyroRawX - GyroRefX )$$

$$GyroSumY = GyroNorAvgY + abs(GyroRawY - GyroRefY)$$

$$GyroSumZ = GyroNorAvgZ + abs(GyroRawZ - GyroRefZ)$$

$$GyroNorAvgX = GyroSumX /NrOfSamplesInTheBuffer$$

$$GyroNorAvgY = GyroSumY /NrOfSamplesInTheBuffer$$

$$GyroNorAvgZ = GyroSumZ /NrOfSamplesInTheBuffer$$

The surface detection device is configured to determine whether the normalised average acceleration value GyroNorAvg of the buffered gyro data points satisfies a predefined normalised average acceleration value condition. The surface detection device is configured to detect a predefined gyro surface property of the surface under the vehicle, when the normalised average acceleration value of the buffered gyro data points satisfies the predefined normalised average acceleration value condition. The predefined normalised average acceleration value condition may be related to a flat surface. The predefined gyro surface property may define that the surface under the vehicle is flat according to the gyro data points.

According to a further embodiment of the invention, the surface detection device is configured to buffer the gyro data points of a predefined moving time frame in the gyro buffer. In other words, the gyro buffer comprises the last gyro data points that were recorded within the predefined moving timeframe.

According to further embodiment of the invention, the predefined GNSS data point condition comprises that a horizontal dilution value of precision of the respective GNSS data point is below a predefined threshold horizontal dilution value and/or that a vertical dilution value of the precision of the respective GNSS data point is below a threshold vertical dilution value and/or that a GNSS speed value of the GNSS data point is above a predefined threshold speed value and/or that a slope value between the last GNSS data points is below a predefined threshold slope value. In other words, the surface detection device is configured to restrict the buffering of the GNSS data points to the GNSS data points that fulfil the predefined GNSS data point condition. The embodiment has the advantage that the buffering of the GNSS data points may be limited to reliable GNSS data points.

According to a further embodiment of the invention, the surface detection device is configured to calculate the total vertical difference value when the vehicle has stopped and when a predefined number or at least the predefined number of the GNSS data points is buffered in the GNSS buffer and a time difference between a timestamp of a current GNSS data point and a timestamp of a previous data point is below a predefined threshold time difference. In other words, the calculation of the total vertical difference value requires that the vehicle has stopped and that the buffer comprises the predefined number of the GNSS data points or at least the predefined number of the GNSS data points. In addition, the calculation of the total vertical difference value may require that the time difference between the timestamp of the current GNSS data point and the timestamp of the preceding GNSS data point is below the predefined threshold time difference.

According to a further embodiment of the invention, the surface detection device is configured to calculate the total vertical difference value in the following way. The calculation comprises a determination of respective altitude difference values between the altitude values of subsequent GNSS data points and a summing up of the altitude difference values of the subsequent GNSS data points. In other words, the calculation of the total vertical difference value comprises a calculation of the altitude difference values between two subsequent of the GNSS data points. The calculation is performed for each pair of the subsequent GNSS data points. The respective altitude difference values of the pairs of the GNSS data points are summed up to determine the total vertical difference value.

According to a further embodiment of the invention, the surface detection device is configured to delete the buffered GNSS data points in the buffer when the slope value between the last GNSS data points received by the surface detection device is above a predefined threshold slope value. In other words, the surface detection device is configured to delete the buffered GNSS data points from the GNSS buffer when the slope value between the last GNSS data points is above the predefined threshold slope value. The embodiment has the advantage that the method is restricted to situations when the slope is below the predefined slope value.

According to a further embodiment of the invention, the surface detection device is configured to detect a calibration surface property of the surface under the vehicle, when the predefined GNSS surface property is detected or the predefined gyro surface property is detected. In other words, a calibration surface property is defined. The calibration surface property may indicate that the current surface under the vehicle is suitable for an execution of a calibration procedure. The surface detection device is configured to detect the calibration surface property when at least one of the GNSS surface condition and the gyro surface condition is detected. The embodiment has the advantage that the surface detection device is configured to detect the calibration surface property using the GNSS based surface recognition procedure or using the gyro based surface recognition procedure.

According to a further embodiment of the invention, the surface detection device is configured to detect calibration surface property of the surface under the vehicle when the predefined GNSS surface property is detected and the predefined gyro property is detected. In other words, the surface detection device is configured to detect the calibration surface property of the surface under the vehicle when both of the predefined GNSS surface property and the gyro surface property are detected. The embodiment has the advantage, that a reliable detection of the calibration surface property of the surface under the vehicle is provided.

According to a further embodiment of the invention, the surface detection device is configured to perform the GNSS based surface recognition procedure. The surface detection device is configured to receive the gyro data points during the operation of the vehicle and to buffer the gyro data points. The surface detection device is configured to analyse the buffered gyro data points only when the predefined GNSS surface condition is detected. In other words, the surface detection device is configured to receive gyro data points during the operation of the vehicle, and to add the gyro data points to the buffer. A continuation of the gyro based surface recognition procedure, comprising the calculation of the normalized average acceleration value of the acceleration values of the buffered gyro data points, when the surface detection device recognizes the stop of the vehicle, the determination whether the normalized average acceleration value of the buffered gyro data points satisfies the predefined normalized average acceleration value condition, and the detection of the predefined gyro surface condition of the surface when the normalized average acceleration value of the buffered gyro data points satisfies the predefined normalized average acceleration value condition requires that the surface detection device detects the GNSS surface condition. The surface detection device is configured to detect the calibration surface property when the predefined GNSS surface condition is detected and the predefined gyro surface condition is detected. The embodiment has the advantage that the continuation of the gyro-based surface recognition procedure is limited to situations where the GNSS-based surface property is satisfied.

According to a further embodiment of the invention, the surface detection device is configured to initiate a calibration procedure to calibrate a gyro device, when the surface under the vehicle is defined as flat. In other words, the surface detection device and/or the vehicle comprises the gyro device. The surface detection device is configured to start the calibration procedure to calibrate the gyro device when the calibration surface property is detected.

A second aspect of the present invention is related to a vehicle comprising a surface detection device according to the first aspect of the present invention.

A third aspect of the present invention is related to a method to operate a surface detection device.

The method comprises the following steps of a surface recognition procedure performed by the surface detection device.

The method comprises a step of receiving data points during an operation of the vehicle and adding at least some of the data points to a buffer of the surface detection device. The data points relate to a motion of the vehicle.

The method comprises a step of analyzing the buffered data points, when the surface detection device recognizes the a of the vehicle.

The method comprises a step of detecting a predefined surface property of the surface, when the analysis of the buffered data points reveals that a predefined surface condition is satisfied.

According to a first alternative, the method comprises the following steps of a GNSS based surface recognition procedure performed by the surface detection device.

A first step of the GNSS based surface recognition procedure comprises receiving GNSS data points during an operation of the vehicle and adding the GNSS data points satisfying a predefined GNSS condition to a buffer.

A next step of the GNSS based surface recognition procedure comprises calculating a total vertical difference value of altitude values of the buffered GNSS data points when the surface detection device has recognised that the vehicle has stopped.

A next step of the GNSS based surface recognition procedure comprises a determination whether the total vertical difference value satisfies a predefined total vertical difference value condition.

A next step of the GNSS based surface recognition procedure comprises a detection of a predefined GNSS surface property of the surface, when the total vertical difference value satisfies the predefined total vertical difference value condition.

According to a second alternative, the method comprises the following steps of a gyro based surface recognition procedure performed by the surface detection device.

A first step of the gyro based surface recognition procedure comprises a receiving of gyro data points during an operation of the vehicle and an adding of the gyro data points to a buffer.

A next step of the gyro based surface recognition procedure comprises a calculation of a normalized average acceleration value of acceleration values of the buffered gyro data points when the surface detection device recognises, that the vehicle has stopped.

A next step of the gyro based surface recognition procedure comprises a determination whether the normalized average acceleration value of the buffered gyro data points satisfies a predefined normalized average acceleration value condition.

A next step of the gyro based surface recognition procedure comprises a detection of a predefined gyro surface property of the surface, when the normalized average acceleration value of the buffered gyro data points satisfies the predefined normalized average acceleration value condition.

A fourth aspect of the invention is related to computer program product, wherein the computer program product is configured to perform the steps of a method according to the third aspect of the present invention, when performed by a surface detecting device.

A fifth aspect of the present invention is related to computer readable memory comprising a computer program product according to the fourth aspect of the invention.

For use cases or use situations which may arise in the method and which are not explicitly described here, it may be provided that, in accordance with the method, an error message and/or a prompt for user feedback is output and/or a default settings and/or a predetermined initial state is set.

The surface detection device may comprise a computing unit to perform steps of the method.

A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

The invention also comprises the combinations of the features of the described embodiments.

In the following an exemplary implementation of the invention is described. The figures show:

Fig. 1    a schematic illustration of the vehicle comprising a surface detection device; and

Fig. 2    a schematic illustration of a method to operate a surface detection device.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

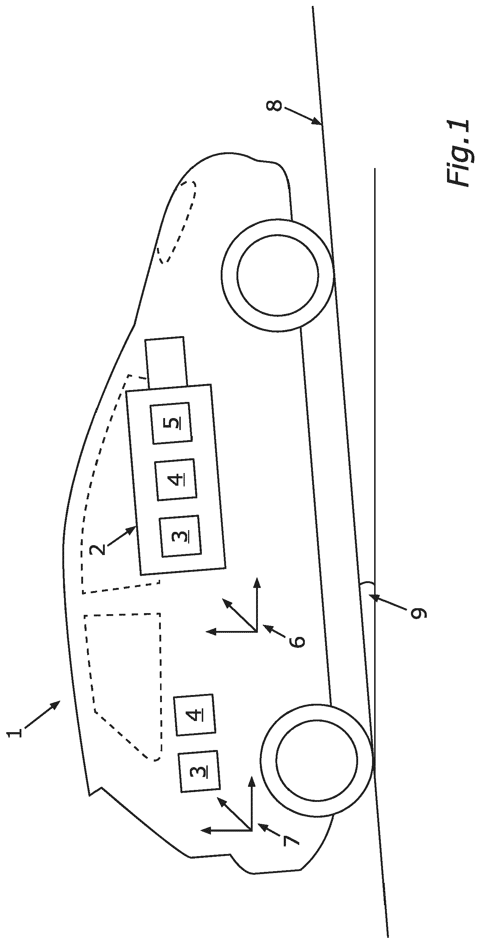

Fig. 1 shows a schematic illustration of the vehicle comprising a surface detection device.

The surface detection device 2 of the vehicle 1 may be configured as an OBD stick, that may be plugged into an OBD interface of the vehicle 1. The surface detection device 2 may be configured to record a driving of the vehicle 1. The vehicle 1 may be a truck or a passenger vehicle 1. The surface detection device 2 may comprise a gyro device 3, a GNSS device 4 and a control unit 5. The gyro device 3 may comprise three accelerometer units, configured to determine an acceleration of a respective axes of a coordinate system 6 of the gyro device 3. The coordinate system 6 of the gyro device 3 may differ from a coordinate system 7 of the vehicle 1. Therefore to determine a driving of the vehicle 1, it may be necessary to determine a translation matrix to translate the acceleration values evaluated by the gyro device 3 in the coordinate system 6 of the gyro device 3 to the coordinate system 7 of the vehicle 1. The determination of the translation matrix may be performed in a calibration procedure of the gyro device 3 that may be performed during the manufacturing of the vehicle 1.

It may be possible that the translation matrix has to be redetermined in the calibration procedure performed after the manufacturing of the vehicle 1. In order to re-determine the translation matrix it may be necessary to ensure that a surface 8 under the vehicle 1 is flat. The fact that the surface 8 is flat may be related to a calibration surface property of the surface 8. The flat surface 8 may be defined as a surface that has a slope 9 of a slope value under a predefined threshold slope value. The calibration surface property of the surface 8 under the vehicle 1 may be necessary to perform the calibration procedure.

The surface detection device 2 may be configured to detect the calibration surface property of the surface 8 under the vehicle 1 based on GNSS data points and/or based on gyro data points. The GNSS data points may be provided by the GNSS device 4 of the surface detection device 2 or by the GNSS device 4 of the vehicle 1. The GNSS data points may be provided to the control unit 5 of the surface detection device 2. The GNSS data points may be generated by the GNSS device 4 based on GNSS signals, received by the GNSS device 4. The GNSS data points may be generated during an operation of the vehicle 1.

When the control unit 5 receives a respective one of the GNSS data points, the control unit 5 may determine whether the respective GNSS data point fulfils a predefined GNSS data point condition. When the respective GNSS data point fulfils the predefined GNSS data point condition, the control unit 5 may add the respective GNSS data point to a buffer. The surface detection device 2 may be configured to determine whether the vehicle 1 has stopped. The stop of the vehicle 1 may be determined based on data provided by the vehicle 1 or by an analysis of the GNSS data points. When the vehicle 1 has stopped, the surface detection device 2 may calculate a total vertical difference value of the buffered GNSS data points. When the total vertical difference value satisfies a predefined total vertical difference value condition, the surface detection device 2 may detect a predefined GNSS surface property of the surface 8 under the vehicle. The predefined GNSS surface property may be related to the slope 9 of the surface 8. The predefined GNSS surface property may indicate that the surface 8 under the vehicle 1 is flat. Flat may mean that the slope value of the slope 9 is zero or below a predefined threshold slope value.

The surface detection device 2 may perform a gyro based surface recognition procedure. During the gyro based surface recognition procedure the surface detection device 2 may receive gyro data points during the operation of the vehicle 1 and may add the gyro data points to the buffer. The surface detection device 2 may be configured to calculate a normalised average acceleration value of acceleration values of the buffered gyro data points when the surface detection device 2 recognises that the vehicle 1 has stopped. The surface detection device 2 may determine whether the normalized average acceleration value of the gyro data points satisfies a predefined normalised average acceleration value condition and may detect the predefined gyro surface property of the surface 8, when the predefined normalised average acceleration value condition is satisfied.

When the predefined GNSS surface property and/or the predefined gyro surface property are detected, the surface detection device 2 may detect the predefined calibration surface property indicating that the surface 8 under the vehicle 1 is flat and thus suitable to perform the calibration procedure. The surface detection device 2 may therefore initiate the calibration procedure of the gyro device 3.

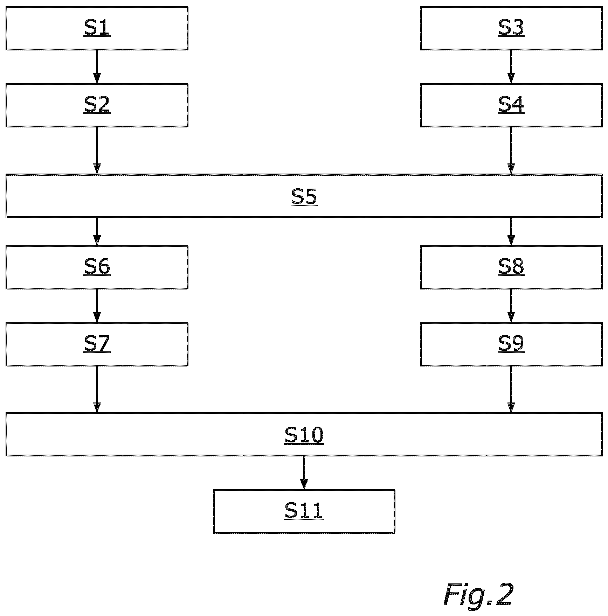

Fig. 2 shows a schematic illustration of a method to operate a surface detection device.

In a first step S1, the surface detection device 2 may receive GNSS data points during an operation of the vehicle 1.

In a second step S2, the surface detection device 2 may determine whether the respective GNSS data points satisfy a predefined GNSS data point condition. If the respective GNSS data points satisfy the predefined GNSS data point condition, the surface detection device 2 may add the respective GNSS data points to a buffer.

In a third step S3, the surface detection device 2 may receive gyro data points during the operation of the vehicle 1.

In a fourth step S4, the surface detection device 2 may add the gyro data points to the buffer.

In a fifth step S5, the surface detection device 2 may recognise that the vehicle 1 has stopped.

In a sixth step S6, the surface detection device 2 may calculate a total vertical difference value of the buffered GNSS data points and determine whether the total vertical difference value satisfies a predefined total vertical difference value condition.

In a seventh step S7, if the predefined total vertical difference value condition is fulfilled, the surface detection device 2 may detect the predefined GNSS surface property.

In an eighth step S8, the surface detection device 2 may initiate the calculation of a normalised average acceleration value of the acceleration values of the buffered gyro data points. The surface detection device 2 may determine whether the normalised average acceleration value of the buffered gyro data points satisfies a predefined normalised average acceleration value condition.

In an ninth step S9, the surface detecting device 2 may detect the predefined gyro surface property of the surface 8 when the normalised average of the buffer gyro data points satisfies a predefined normalised average condition.

In a tenth step S10 the surface detection device 2 may detect a calibration surface property of the surface 8, indicating that the surface 8 is flat, because the predefined GNSS surface property and the predefined gyro surface property is detected.

In an eleventh step S11 the surface detection device 2 may initiate a recalibration of the gyro device 3.

The invention addresses the problem of recognising that the road profile is flat. This can be used for multiple use cases, such as accelerometer normalisation for driver assessment, providing input to cloud applications that check the road profile, etc.

The algorithm takes as input raw data from GNSS and gyroscope sensors and provides as output whether the road is flat or not. The main advantage of the solution is that it does not require access to OEM proprietary data from the vehicle's CAN bus to estimate whether the road is flat or not - so it can be used on any aftermarket device that has gyroscope and GNSS sensors.

The invention can be used on any surface detection device 2 comprising the GNSS device 4 and the gyro device 3 installed in the passenger or commercial vehicle 1. The algorithm may also work if one of the GNSS device 4 and the gyro device 3 is missing, but the accuracy of the output will be affected. Additional inputs can be added to further improve the accuracy of the algorithm, such as OEM specific CAN frames containing vehicle tilt information of the vehicle 1.

The surface detection device 2 may periodically check the calibration of the gyro device 3 and initiate the calibration procedure if it is found to be out of tolerance/calibration. A pass, fail or re-calibrate notification may be sent to the server. This may be necessary to ensure that the surface detection device 2 has not been moved and to obtain the best possible calibration. Proof of calibration may be essential to make gyro data points provided by the gyro device 3 trustworthy.

The surface detection device 2 may be configured to perform the calibration procedure in the background while the vehicle 1 is in operation. The calibration procedure may use same parameters as the original calibration procedure, so it may take the same amount of time. To perform the calibration procedure, the surface detection device 2 may need to implement a flat road detection algorithm based on the GNSS data points and/or the gyro data points.

Once the calibration procedure is completed, the surface detection device 2 may use three straight line brakes to check which is better: the translation matrix of the initial calibration procedure or the translation matrix of the current calibration procedure. If the translation matrix of the current calibration procedure proves to be better on at least two out of three straight line brakes, the translation matrix of the current calibration procedure may replace the translation matrix of the initial calibration procedure and the surface detection device 2 may send a calibration notification.

Continuous recalibration may be a configuration item on the surface detection device 2 side that may be enabled by default. This may mean that surface detection device 2 may perform the recalibration by default.

In order to trigger the calibration procedure, which may be a mandatory part of the, the surface detection device 2 may need to detect that the road is flat. To achieve this, the data points may be collected and analysed.

Altitude values of the GNSS data points and acceleration values of the gyro data points may be used to detect, if there are variations in the road. The GNSS based surface recognition procedure may be suitable for detecting variations of the road over longer distances, while the gyro based surface recognition procedure may detect variations of the road over a short period of time.

The altitude value of the GNSS data points may be quite noisy even if the road is relatively flat, and the Vertical Dilution of Precision (VDOP) value of the respective GNSS data points may be taken into account before the respective GNSS data point is even considered as an input to the algorithm.

For this reason, an additional condition can be added to the algorithm to filter out the GNSS data points that introduce an unrealistic height variation value, for example causing the slope value of the road slope to exceed the threshold slope value that may be 35%. With regard to the gyro data points, the acceleration values coming from the gyroscope are higher when the vehicle 1 stops on a ramp than when it stops on a straight and level road.

Below is a possible algorithm for GNSS based surface detection.

```
GNSSflat road detection algo:
If(HDOP<=2)&&(VDOP<=2) && (Speed >7) && (slope between last points < 35%)
//collect points and calculate vdiff as vdiff = abs(current point altitude - previous
point altitude) Vehicle stops:
If (25 points are available) && (currentTimestamp - lastPointTimestamp <=5
seconds) && (vdiff < 10)
Road is flat
Else
Road is not flat
```

Slope between last points calculation:

Distance between last 2 points = multiply speed with 0.2777777777777778 to convert it in m/s (GPS sampling is once/second, so the result is the distance between the last 2 points) Road gradient = abs(currentAltitude - previousaltitude)*100/ Distance between last 2 points.

When vehicle is stationary print if the road is flat or not from GPS point of view On Gyro side, each time when vehicle stops take reference values (as average acceleration value on each angle in the past 1 second).

While vehicle is moving, take the normalized gyro values (e.g. NormalizedX = CurrentX - RefX) and buffer them When the vehicle is stationary, print the sum of absolute values for each gyro angle from the last 4 seconds (last 200 samples)

Algorithm output examples:

After descent, (road profile was similar with the image bellow):

FlatRoadAlgo 1 sec Gyro XYZ sum 11, 39, 3, avg: 0.220000, 0.780000, 0.060000, FlatRoadAlgo speed 1
FlatRoadAlgo Gyro XYZ Norm 0, -3, 0
FlatRoadAlgo Vehicle stationary
FlatRoadAlgo Gyro XYZ last 200: 0.170000, 0.965000, 0.145000 FlatRoadAlgo Vdiff = 55

After ascent, (road profile was similar with the image bellow):

FlatRoadAlgo 1 sec Gyro XYZ sum 9, 44, 0, avg: 0.180000, 0.880000, 0.000000, FlatRoadAlgo speed 1
FlatRoadAlgo Gyro XYZ Norm 0, -3, 0
FlatRoadAlgo Vehicle stationary
FlatRoadAlgo Gyro XYZ last 200: 0.215000, 0.720000, 0.415000
FlatRoadAlgo Vdiff = 24

Steady stop on a flat road,

FlatRoadAlgo speed 0
FlatRoadAlgo Gyro XYZ Norm 0, -3, 0
FlatRoadAlgo Vehicle stationary
FlatRoadAlgo Gyro XYZ last 200: 0.025000, 0.785000, 0.005000 FlatRoadAlgo Vdiff = 4
FlatRoadAlgo FLAT ROAD!

Stop in a ramp after a flat road before crossing railway (slightly bigger values on Gyro XYZ last 200 can be observed:

FlatRoadAlgo speed 1
FlatRoadAlgo Gyro XYZ Norm 0, -4, 0
FlatRoadAlgo Vehicle stationary
FlatRoadAlgo Gyro XYZ last 200: 0.670000, 1.205000, 0.490000 FlatRoadAlgo Vdiff = 3 FlatRoadAlgo FLAT ROAD!

Stop on a flat road:

FlatRoadAlgo Gyro XYZ Norm 0, -3, 0
FlatRoadAlgo Vehicle stationary
FlatRoadAlgo Gyro XYZ last 200: 0.295000, 1.025000, 0.135000 FlatRoadAlgo Vdiff = 8
FlatRoadAlgo FLAT ROAD!

Stop after changing the direction (big values on the gyroscope because of the turn):

FlatRoadAlgo Gyro XYZ Norm -2, -3, -2
FlatRoadAlgo Vehicle stationary
FlatRoadAlgo Gyro XYZ last 200: 8.750000, 2.275000, 9.515000 FlatRoadAlgo Vdiff = 0
FlatRoadAlgo FLAT ROAD!

As output of the tests, following adjustments were made to the algorithm:
The GPS algorithm proved to be quite reliable - the detection of the flat and non-flat road worked as expected. It was decided to completely reset the algorithm if an unrealistic gradient (>35%) was detected. It was decided to completely reset the algorithm if the vehicle was moving slowly <7 km/h for more than 5 seconds. This means that the next time the algorithm needs to get 25 more GPS points that meet the defined condition to check if the road is flat. The rationale for this decision is to avoid the use case of a flat road ending in a steep and fairly long ramp requiring a low speed.

Below is another possible algorithm for GNSS based surface detection:

```
GPSBasedFlatRoadDetectionAlgo:
If(HDOP<=2)&&(VDOP<=2) && (FixType == 3D fix)
    If( GnssSpeed >7 ) && ( SlopeBetweenLastGpsPoints < 35% )
        Buffer CurrentGnssAltitude
    Else if ( SlopeBetweenLastGpsPoints >= 35% )
        Reset algorithm (Reset GnssAltitude buffer)
    Else if vehicle stops:
        If (25 points are available)
            && (currentTimestamp – lastPointTimestamp <=5 seconds)
        Calculate total vertical difference (VDIFF) in the following way:
        For each element from GnssAltitudeBuffer
            VDIFF = VDIFF + abs (currentGnssAltitude - previousGnssAltitude)
            If (VDIFF < 10)
                Road is flat
            Else
                Road is not flat
        Else if (currentTimestamp – lastPointTimestamp > 5 seconds)
            Reset algorithm (Reset GnssAltitude buffer)
        Else

            Reset algorithm (Reset GnssAltitude buffer).
```

It was noticed that gyro data points may also be "noisy" and may have different values on different gyro devices 3. On the tested gyro device 3 during standstill of the vehicle 1, the gyro device 3 provided acceleration values of 0, -3, 0. In order to mitigate this problem, reference acceleration values may be taken in the following way.

The reference acceleration value in a first direction GyroRefX is the average acceleration value in the first direction of GyroRawX acceleration values in the first direction collected during one second after the vehicle 1 has been stopped in the latest 3 seconds. This value is persistently stored. The reference acceleration value in a second direction GyroRefY is the average acceleration value in the second direction of GyroRawY acceleration values in the second direction collected during one second after the vehicle 1 has been stop in the latest 3 seconds. This value is persistently stored.

The reference acceleration value in a third direction GyroRefZ is average acceleration value in the third direction of GyroRawZ acceleration values in the third direction collected during one second after the vehicle has been stop in the latest 3 seconds. This value is persistently stored.

The fact that the reference acceleration values of the respective directions are constantly updated is helping in case the acceleration values will change over time e.g. due to temperature variation or changing the reference position of the gyro device 3.

It was observed that if the sum of the average normalized acceleration values collected during the last 4 seconds are < 3 DPS, there is a high possibility that the road was flat.

Possible algorithm for gyro based surface detection:

GyroscopeBasedFlatRoadDetection:

Every GyroSamplingFrequency, GyroRaw values are buffered in the GyroBuffer. GyroBuffer contains the GyroRawValues from the last 4 seconds.

When the vehicle is stopped if the buffer contains gyroscope data from the last 4 seconds, get the normalized average in the following way (GyroSum values are initialized with 0):

For each GyroRawValue in the buffer:

$$GyroSumX = GyroNorAvgX + abs(GyroRawX - GyroRefX)$$

$$GyroSumY = GyroNorAvgY + abs(GyroRawY - GyroRefY) \quad GyroSumZ = GyroNorAvgZ + abs(GyroRawZ - GyroRefZ)$$

$$GyroNorAvgX = GyroSumX / NrOfSamplesInTheBuffer$$

$$GyroNorAvgY = GyroSumY / NrOfSamplesInTheBuffer$$

$$GyroNorAvgZ = GyroSumZ / NrOfSamplesInTheBuffer$$

```
If GyroNorAvgX + GyroNorAvgY + GyroNorAvgZ < 3 DPS
   road is flat
 else
   road is not flat.
```

Resulted flat road detection algorithm:

FlatRoadDetectionAlgorithm

```
If the road is flat accordingly to GPSBasedFlatRoadDetectionAlgo
   Check GyroscopeBasedFlatRoadDetection
   If the road is flat accordingly to GyroscopeBasedFlatRoadDetection
     Road is flat
   Else
     Road is not flat
     Reset algorithms (Reset GnssAltitude and GyroBuffer buffers)
 Else
   Road is not flat.
```

The absence of a GNSS signal or a poor GPS signal would prevent the flat road detection algorithm from functioning, resulting in a delay in the commencement of the calibration procedure. In the future, it may be necessary to modify the thresholds derived from the algorithm, given that the tests were conducted on the vehicle 1 with a single dongle due to the limited time available. In the future, it may be possible to make the thresholds configurable. For instance, the gyro device 3 might be set to accept higher values on older cars that are prone to generating more vibrations. Additionally, the way in which the gyroscope algorithm was defined may not allow the calibration procedure to commence if the vehicle 1 turns before stopping. This limitation was accepted because in the majority of real-world scenarios, the difference in altitude between the road and a parking area is minimal when the vehicle 1 is turning before stopping. The purpose of the algorithm is to prevent as much as possible static learning of the validation calibration from occurring in conditions that will introduce errors in the algorithm. However, it does not guarantee that the static learning is performed on a perfectly flat surface 8. This is why, once the validation calibration procedure is completed, it is evaluated against the current one and it is replacing it only if it is superior. Once the validation calibration procedure is completed, the surface detection device 2 may assess which calibration is superior: the initial calibration or the current calibration. If the current calibration is superior on at least two out of three straight line brakes, the current calibration will replace the initial calibration, and the surface detection device 2 will send the translation matrix to the gyro device 3.

For speed values of the GNSS data points of 7-10 km/h, if the GNSS altitude value is changed, the minimum change is 1 m. The surface detection device 2 may reset the buffered GNSS data points, even though the slope is minimal. A high-level description of the conditions that allow for the validation and calibration to commence with the static learning on a flat road may be as follows: A favourable GPS signal, a lack of a difference in altitude value over the past 25 seconds, a relatively flat road over the past 4 seconds, an absence of a turn over the past 4 seconds, and a speed value of less than 7 km/h over the past 5 seconds may all be conditions that may be met for the calibration procedure.

For every GyroSamplingFrequency, gyro data points (GyroRaw) may be buffered in the buffer/GyroBuffer. The buffer may comprise the gyro data points comprising respective acceleration values GyroRawValues from the last 4 seconds.

When the vehicle is stopped, if the buffer contains gyro data points from the last 4 seconds, the surface detection device may determine the normalized average acceleration value in the following way, wherein the summed acceleration value GyroSum may be initialized with "0":

For each gyro data point in the buffer:

$$GyroSumX = GyroNorAvgX + abs(GyroRawX - GyroRefX)$$

$$GyroSumY = GyroNorAvgY + abs(GyroRawY - GyroRefY)$$

$$GyroSumZ = GyroNorAvgZ + abs(GyroRawZ - GyroRefZ)$$

$$GyroNorAvgX = GyroSumX / NrOfSamplesInTheBuffer \quad GyroNorAvgY$$
$$= GyroSumY / NrOfSamplesInTheBuffer$$

$$GyroNorAvgZ = GyroSumZ / NrOfSamplesInTheBuffer$$

```
If GyroNorAvgX + GyroNorAvgY + GyroNorAvgZ < 3 DPS
   road is flat
else
   road is not flat.
```

The method may be performed for the three directions X, Y, Z.

The algorithm may consider all axes of the gyroscope, including the raw values. The reference values may be calculated at point 1. The average acceleration values may then be calculated and compared to ensure that the average variation of all three axes does not exceed 3 DPS (degress per second).

One limitation of this solution may be that any rotation would cause the algorithm to judge that the road is not flat. In other words, even if the road is flat and the vehicle turns before it stops, the algorithm may consider that the road is not flat. This behaviour serves well the dongle use cases, because the objective is to start calibration procedure of the gyro device 3 when the chances that the road is not flat are minimal. Therefore, it is preferable to discard a non-flat road because of a turn than to start the calibration procedure on a road which is not flat.

The approach, as it is currently defined, is effective in application use cases where a specific action is to be triggered only when the road is flat, with no requirement for the action to be performed each time the road is actually flat. Its primary advantage is that this is achieved in a straightforward manner, without the need to implement complex translation algorithms on the gyro device 3 to determine the vehicle's 1 actual axis.

Regarding the 4 seconds which are used for the gyro device 3, and rationale behind the decision. This is linked with the GPS based flat road detection, more specifically with the following condition from it:

If

$$(GnssSpeed > 7) \&\& (SlopeBetweenLastGpsPoints < 35\%)$$

That condition was added because it was noticed that GNSS altitude values become less reliable as the speed value decreases bellow 7 KM/h, so the gyro based surface recognition procedure was added to cover the last portion of the road since the speed value decreased bellow 7 km/h until the vehicle 1 is stopped.

To conclude this point, it may be stated that gyro based surface recognition procedure and GNSS based surface recognition procedure may be used as standalone surface recognition procedures for flat road detection. However, this approach is associated with a cost in accuracy. Consequently, the optimal solution is to utilise the gyro based surface recognition procedure and the GNSS based surface recognition procedure in conjunction with one another given that the strengths of one surface recognition procedure are the weaknesses of the other surface recognition procedure and vice versa. Alternatively, it is possible to consider the potential addition of further sources to the overall surface recognition procedure, provided that the hardware and system in question are capable of supporting this.

Overall, the example shows, how flat road detection is provided by the invention.

Reference signs

| 1 | vehicle |
| 2 | surface detection device |
| 3 | gyro device |
| 4 | GNSS device |
| 5 | control unit |
| 6 | coordinate system of the gyro device |
| 7 | coordinate system of the vehicle |
| 8 | surface |
| 9 | slope |
| S1-S11 | steps of the method |

**Claims**

1. Surface detection device (2) configured to detect a predefined surface property of a surface (8) under a vehicle (1), **characterized in that** the surface detection device (2) is configured to perform a surface recognition procedure, wherein the surface detection device (2) is configured to

   - receive data points during an operation of the vehicle (1) and to add at least some of the data points to a buffer of the surface detection device (2), wherein the data points relate to a motion of the vehicle (1);
   - analyze the buffered data points, when the surface detection device (2) recognizes a stop of the vehicle (1); and
   - detect the predefined surface property of the surface (8), when the analysis of the buffered data points reveals that a predefined surface condition is satisfied.

2. Surface detection device (2) according to claim 1, **characterized in that** the surface recognition procedure comprises a GNSS based surface recognition procedure, wherein the surface detection device (2) is configured to

   - receive GNSS data points during the operation of the vehicle (1), and to add the GNSS data points to the buffer, if the GNSS data points fulfil a predefined GNSS condition;
   - calculate a total vertical difference value of altitude values of the buffered GNSS data points, when the surface detection device (2) recognizes the stop of the vehicle (1);
   - determine whether the total vertical difference value satisfies a predefined total vertical difference value condition; and
   - detect a predefined GNSS surface property of the surface (8), when the total vertical difference value satisfies the predefined total vertical difference value condition.

3. Surface detection device (2) according to claim 1 or 2, **characterized in that** the surface recognition procedure comprises a gyro based surface recognition procedure, wherein the surface detection device (2) is configured to

   - receive gyro data points during the operation of the vehicle (1), and to add the gyro data points to the buffer;
   - calculate a normalized average acceleration value of acceleration values of the buffered gyro data points, when the surface detection device (2) recognizes the stop of the vehicle (1);

- determine whether the normalized average acceleration value of the buffered gyro data points satisfies a predefined normalized average acceleration value condition; and

- detect a predefined gyro surface property of the surface (8) when the normalized average acceleration value of the buffered gyro data points satisfies the predefined normalized average acceleration value condition.

4. Surface detection device (2) according to any one of the preceding claims comprising at least the features of claim 2, **characterized in that** the predefined GNSS data point condition comprises that

- a horizontal dilution value of precision of the respective GNSS data point is below a predefined threshold horizontal dilution value, and/or

- a vertical dilution of precision value of the respective GNSS data point is below a predefined threshold vertical dilution value, and/or

- a GNSS speed value of the respective GNSS data point is above a predefined threshold speed value, and/or

- a slope value between last GNSS data points is below a predefined threshold slope value.

5. Surface detection device (2) according to any one of the preceding claims comprising at least the features of claim 2, **characterized in that** the surface detection device (2) is configured to calculate the total vertical difference value when the vehicle (1) has stopped, a predefined number or at least the predefined number of GNSS data points is in the buffer and a time difference between a timestamp of a current GNSS data point and a timestamp of a previous GNSS data point is below a predefined threshold time difference.

6. Surface detection device (2) according to any one of the preceding claims comprising at least the features of claim 2, **characterized in that** the surface detection device (2) is configured to calculate the total vertical difference value in the following way: determining respective vertical difference values between the altitude values of subsequent GNSS data points and summing up the vertical difference values of the subsequent GNSS data points.

7. Surface detection device (2) according to any one of the preceding claims comprising at least the features of claim 2, **characterized in that** the surface detection device (2) is configured to delete the buffered GNSS data points in the buffer when the slope value between last GNSS data points received by the surface detection device (2) is above a predefined threshold slope value.

8. Surface detection device (2) according to any one of the preceding claims comprising at least the features of claim 2 and claim 3,
**characterized in that** the surface detection device (2) is configured to detect a calibration surface property when the predefined GNSS surface property is detected or the predefined gyro surface property is detected.

9. Surface detection device (2) according to any one of the preceding claims comprising at least the features of claim 2 and claim 3,
**characterized in that** the surface detection device (2) is configured to detect a calibration surface property when the predefined GNSS surface property is detected and the predefined gyro surface property is detected.

10. Surface detection device (2) according to claim 9,
**characterized in that** the surface detection device (2) is configured to

- perform the GNSS based surface recognition procedure;

- receive the gyro data points during the operation of the vehicle (2) and to buffer the gyro data points;

- calculate the normalized average acceleration value of acceleration values of the buffered gyro data points only when the predefined GNSS surface property is detected; and

- detect the calibration surface property when the predefined GNSS surface property is detected and the predefined gyro surface property is detected.

11. Surface detection device (2) according to any one of the preceding claims 8 to 10, **characterized in that** the surface detection device (2) is configured to initiate a calibration procedure to calibrate a gyro device (3) when the calibration surface property is detected.

12. Vehicle (1) comprising a surface detection device (2) according to any one of the preceding claims.

13. Method to operate a surface detection device (2), comprising the following steps of a surface recognition procedure performed by the surface detection device (2);

 - receiving data points during an operation of the vehicle (1) and adding at least some of the data points to a buffer of the surface detection device (2) wherein the data points relate to a motion of the vehicle (1);
 - analyzing the buffered data points, when the surface detection device (2) recognizes a stop of the vehicle (1); and
 - detecting a predefined surface property of the surface (8), when the analysis of the buffered data points reveals that a predefined surface condition is satisfied.

14. Computer program product, wherein the computer program product is configured to perform the steps of a method according to claim 13, when performed by a surface detecting device (2).

15. Computer-readable memory comprising a computer program product according to claim 14.

Fig.1

Fig.2

## EUROPEAN SEARCH REPORT

**Application Number**

EP 25 17 7225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/070305 A1 (GROTHER ETHAN M [US] ET AL) 11 March 2021 (2021-03-11) | 1-4,6, 12-15 | INV.<br>G01C19/00 |
| Y | * paragraphs [0002], [0004], [0008] - [0009], [0011], [0015] - [0017], [0040] - [0046], [0073] - paragraphs [0097], [0101] - [0102]; figures 1,2A,4,8A-8B * | 5,7-11 | G01C21/00<br>G01C21/28<br>B60W40/06<br>G01C7/04 |
| | ----- | | |
| X | US 2020/139784 A1 (SRIDHAR VIJAYARAGHAVAN [US] ET AL) 7 May 2020 (2020-05-07) | 1,12-15 | |
| Y | * paragraphs [0003], [0038] - [0039], | 5,7-11 | |
| A | [0048] - [0049], [0051], [0058], [0102] - [0104] - paragraphs [0107] - [0108]; figures 2,6,15 * | 2-4,6 | |
| | ----- | | |
| A | JAKOB ERIKSSON ET AL: "The pothole patrol",<br>PROCEEDINGS OF THE SIXTH INTERNATIONAL CONFERENCE ON MOBILE SYSTEMS, APPLICATIONS, AND SERVICES : BRECKENRIDGE, COLORADO, USA, JUNE 17 - 20, 2008, ACM, NEW YORK, NY,<br>17 June 2008 (2008-06-17), pages 29-39,<br>XP058183978,<br>DOI: 10.1145/1378600.1378605<br>ISBN: 978-1-60558-139-2 | 1-15 | |
| | ----- | | |

**TECHNICAL FIELDS SEARCHED (IPC)**

G01C
B60K
B60W

The present search report has been drawn up for all claims

| Place of search | Date of completion of the search | Examiner |
|---|---|---|
| The Hague | 19 January 2026 | Anastasiou, Ismini |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 7225

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | Publication date |
|---|---|---|---|
| US 2021070305 A1 | 11-03-2021 | US 2021070305 A1<br>US 2024067181 A1 | 11-03-2021<br>29-02-2024 |
| US 2020139784 A1 | 07-05-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2732241 B1
- CN 100516773 C
- US 2011035147 A1